# EUROPÄISCHE PATENTSCHRIFT

(11) **EP 0 470 511 B1**
(45) Veröffentlichungstag und Bekanntmachung des Hinweises auf die Patenterteilung: **11.09.1996**
(21) Anmeldenummer: 91112989.8
(22) Anmeldetag: 02.08.1991
(51) Int. Cl.: B60K 28/08, B64F 1/22, B62D 49/00, B60K 28/10

(54) **Schleppfahrzeug für Flugzeuge**
Tractor for towing aeroplanes
Tracteur de remorque d'avions

(30) Priorität: 06.08.1990 DE 4024894
(43) Veröffentlichungstag der Anmeldung: 12.02.1992
(73) Patentinhaber: Krauss-Maffei Aktiengesellschaft, D-80997 München (DE)
(72) Erfinder: Pollner, Jürgen, Dipl.-Ing. (FH), W-8000 München 60 (DE); Trummer, Gregor, Dipl.-Ing. (FH), W-8134 Aschering (DE); Mölzer, Peter, Dipl.-Ing., W-8061 Schwabhausen (DE)

(56) Entgegenhaltungen:
- EP-A- 0 250 957
- WO-A-89/03343
- US-A- 4 113 041

## Beschreibung

Die Erfindung betrifft ein Schleppfahrzeug für Flugzeuge, mit einer Einrichtung zum Ankoppeln oder Aufnehmen des Bugfahrwerkes des Flugzeuges, einem Verbrennungsmotor, dessen Leistung mittels Gaspedal od.dgl. Stellorgan steuerbar ist, und einem vom Verbrennungsmotor angetriebenen Antriebssystem zum Antreiben der Räder des Schleppfahrzeuges, wobei das Stellorgan den Verbrennungsmotor Ober einen Regler steuert.

Die Erfindung ist anwendbar sowohl bei Schleppfahrzeugen mit Direkteinspannung und -Abstützung des Bugrades des Flugzeuges am Schleppfahrzeug, wie aus DE-A 35 34 045, DE-A 37 32 647 und WO-A 85/00790 bekannt, sowie auch bei solchen Schleppfahrzeugen, die mit dem Flugzeug über eine Zugstange gekoppelt werden, wie z.B. aus US-A 41 13 041 bekannt. Ein Schleppfahrzeug der eingangs genannten Art nach dem Oberbegriff des Anspruchs 1 ist aus WO 89/03343 bekannt.

Bei Schleppfahrzeugen beider Arten besteht ein wesentliches Problem darin, daß die beim Schleppen auf das Bugfahrwerk des Flugzeuges ausgeübten Belastungen nicht größer sein sollten als die Belastungen, für die das Bugfahrwerk im Hinblick auf die Start-, Lande- und Rollbewegungen des Flugzeuges konstruktiv ausgelegt ist. Hieraus ergibt sich zunächst die offensichtliche Forderung, daß die beim Schleppbetrieb, insbesondere beim Anfahren und Bremsen, auf das Bugfahrwerk wirkenden Kräfte nicht so groß sein dürfen, daß sie zu einer Beschädigung des Bugfahrwerkes führen. Um diese Forderung zu berücksichtigen, ist es aus US-A 4 113 041 bekannt, die in der Zugstange wirkenden Kräfte fortlaufend zu messen und den Antriebsmotor und/oder die Bremsen des Schleppfahrzeuges so zu steuern, daß die Kraft in der Zugstange innerhalb vorgegebener Grenzen gehalten wird. In WO/A 85/00790 wird vorgeschlagen, dieses System auch bei einem Schleppfahrzeug mit Direkteinspannung des Bugrades anzuwenden.

Bei dem gattungsgemäßen Schleppfahrzeug gemäß WO 089/03343 wird die vom Schleppfahrzeug auf das Bugrad ausgeübte Zugkraft nicht direkt gemessen, sondern aus der laufend gemessenen Beschleunigung des Traktors und anderen Größen laufend errechnet, und die Motorleistung wird über einen Regler so gesteuert, daß die so errechnete Zugkraft einen vorgegebenen, vom Flugzeugtyp abhängigen Grenzwert nicht übersteigt. WO-A-85/00790 beschreibt ein ähnliches Schleppfahrzeug mit einem Regler, der in Abhängigkeit der Signale von Zugkraft-, Geschwindigkeits- und Drehmomentsensoren den Motor des Schleppfahrzeugs derart steuert, daß die auf das Bugrad wirkende Zugkraft einen Grenzwert nicht übersteigt.

Alle diese bekannten Systeme mit direkter oder indirekter Krafterfassung und Begrenzung der Zugkraft auf einen Maximalwert können zwar in dieser oder ähnlicher Form auch beim erfindungsgemäßen Schleppfahrzeug zusätzlich angewendet werden, lassen jedoch wesentliche Probleme unberücksichtigt und ungelöst:
a) Mit der Berücksichtigung lediglich der maximal zulässigen Belastung des Bugfahrwerkes, bei deren Überschreitung eine Beschädigung eintreten kann, wird den Sicherheitsanforderungen nicht hinreichend Rechnung getragen. Für die Sicherheit und Lebensdauer eines Bugfahrwerkes sind auch solche Belastungen relevant, die unter der maximal zulässigen Belastungsgrenze bleiben, aber bei wiederholten Lastwechseln zu einer Ermüdung und schließlich zu einem Ermüdungsbruch der betroffenen Konstruktionsteile des Bugfahrwerkes führen können. Vom Flugzeughersteller wird deshalb ein weiterer Belastungsgrenzwert definiert, der wesentlich niedriger als die zulässige Höchstbelastung ist und z.B. 1/4 derselben betragen kann, und der als Ermüdungslast (Fatigue Load) bezeichnet wird, und es wird vorgeschrieben, wie oft diese Ermüdungslast im Betrieb erreicht werden darf. Mit anderen Worten, das Bugfahrwerk ist so ausgelegt, daß es einer bestimmten maximalen Anzahl von Kraftspitzen, die den Betrag der Ermüdungslast erreichen, ausgesetzt werden kann, ohne daß Ermüdungsbrüche zu befürchten sind. Nach Erreichen der vorgegebenen Anzahl von "Fatigue-Load"-Belastungen muß das Bugfahrwerk auf Ermüdung inspiziert werden. Die Anzahl der bei den Start- und Landevorgängen zu erwartenden "Fatigue-Load"-Belastungen, und damit die Zahl der Flugbewegungen, die das Flugzeug ohne Ermüdungsrisiko durchführen kann, liegen als Erfahrungswerte fest. Es ist offensichtlich, daß sich diese Zahl der Flugbewegungen beträchtlich reduzieren würde, wenn beim Schleppbetrieb mit einem Schleppfahrzeug der genannten Art zusätzliche Belastungen mit der Ermüdungslast in größerer Anzahl vorkommen würden. Bei den vorbekannten Schleppfahrzeugen sind keine Mittel vorgesehen, um Belastungen des Bugfahrwerkes, die unterhalb der zulässigen Höchstbelastung liegen, zu erfassen, zu steuern oder in ihrer Häufigkeit zu begrenzen.
b) Das Schleppfahrzeug muß in der Lage sein, Flugzeuge von verschiedenem Typ und mit verschiedenem Beladungszustand zu schleppen. Die zu schleppende Masse kann deshalb beträchtlich variieren. Selbst wenn das Schleppfahrzeug ausschließlich zum Schleppen größerer Verkehrsmaschinen eingesetzt wird, so kann die zu schleppende Masse z.B. im Bereich von 100-400 t variieren, und die maximal zulässige Zugbelastung des Bugfahrwerkes in Längsrichtung kann z.B., je nach Flugzeugtyp, zwischen 15 und 52 t liegen. Bereits bei den vorbekannten Systemen mit Begrenzung der Höchstlast besteht das Problem, daß ein Schleppfahrzeug, dessen Zugkraft nach dem vorbekannten Prinzip so begrenzt würde, daß sie z.B. die kleinste im Einsatz vorkommende Belastungsgrenze von 15 t nicht übersteigt, zum Abschleppen der größten Flugzeuge mit 400 t Gesamtgewicht zu schwach wäre. Bei dem vorbekannten System wird vorgeschlagen, diese Schwierigkeit dadurch zu umgehen, daß dem Regler des Schleppfahrzeuges vor jedem Schleppeinsatz Daten über den Typ und evtl. das Gewicht des zu schleppenden Flugzeuges von Hand eingegeben werden. Dieser Vorschlag ist aber für die Praxis abzulehnen, da er sehr anfällig für Fehler und Irrtümer ist, die zu einem erheblichen Unfallrisiko führen können. Das Problem stellt sich in noch größerem Maße, wenn erfindungsgemäß die zulässigen Ermüdungslasten der jeweils angekoppelten Bugfahrwerke berücksichtigt werden sollen. Diese würden in dem vorstehend genannten Beispiel typabhängig z.B. zwischen 4 und 13 t variieren. Ein Schleppfahrzeug, dessen Zugkraft nach dem vorbekannten Prinzip so begrenzt wäre, daß es die kleinste zulässige Ermüdungslast von 4 t nicht übersteigt, wäre nicht in der Lage, Flugzeuge größerer Typen auch nur von der Stelle zu bewegen.

Man erkennt aus den unter a) und b) geschilderten Problemen, daß die Forderung nach Bereitstellung einer für Flugzeuge unterschiedlichen Typs ausreichenden Zugkraft und nach Berücksichtigung auch der Ermüdungsbelastungen des Bugfahrwerks konkurrierende Forderungen darstellen, denen die vorbekannten Systeme nicht genügen können.

Der Erfindung liegt die Aufgabe zugrunde, ein Schleppfahrzeug der eingangs genannten Art so auszubilden, daß die Anzahl der vom Schleppfahrzeug auf das Bugfahrwerk einwirkenden Belastungsspitzen oder Lastwechsel, deren Betrag einen vorgegebenen Wert übersteigen kann, beherrschbar ist und möglichst gering gehalten werden kann, ohne daß die maximale Zugkraft, die das Schleppfahrzeug ausüben kann, auf diesen vorgegebenen Wert begrenzt sein muß.

Die erfindungsgemäße Lösung der Aufgabe ist im Anspruch 1 angegeben. Die Unteransprüche beziehen sich auf vorteilhafte weitere Ausgestaltungen der Erfindung.

Bei dem erfindungsgemäßen Schleppfahrzeug wird nicht oder nicht nur die Zugkraft begrenzt, sondern der Anstieg der Zugkraft beim Gasgeben des Schleppfahrzeuges. Regelgröße ist dabei der Drehzahlanstieg des Verbrennungsmotors des Schleppfahrzeuges. Durch die Erfindung wird erreicht, daß abrupte Beschleunigungsvorgänge insbesondere beim Anfahren, die zu plötzlichen Belastungsspitzen des Bugfahrwerks führen können und/oder starke Schwingungen des eingespannten Bugfahrwerkes verursachen können, nicht auftreten, so daß die Häufigkeit bzw. Wahrscheinlichkeit von Zugbelastungen, die die jeweils typabhängige Ermüdungslast (Fatigue-Load) erreichen, sehr stark herabgesetzt wird. Gleichwohl bleibt das Schleppfahrzeug in der Lage, die maximale Zugkraft aufzubringen, die zum Schleppen der größten Flugzeugtypen, für die das Fahrzeug vorgesehen ist, im vollbeladenen Zustand erforderlich ist.

Eine Ausführungsform der Erfindung wird im folgenden anhand der Zeichnungen erläutert, es zeigt :
Fig. 1 ein stark vereinfachtes Blockschema des Antriebssystems eines Schleppfahrzeuges mit erfindungsgemäßer Regeleinrichtung.
Fig. 2 ein Kennliniendiagramm zur Veranschaulichung des möglichen Regelverhaltens des Antriebssystems des Schleppfahrzeugs.

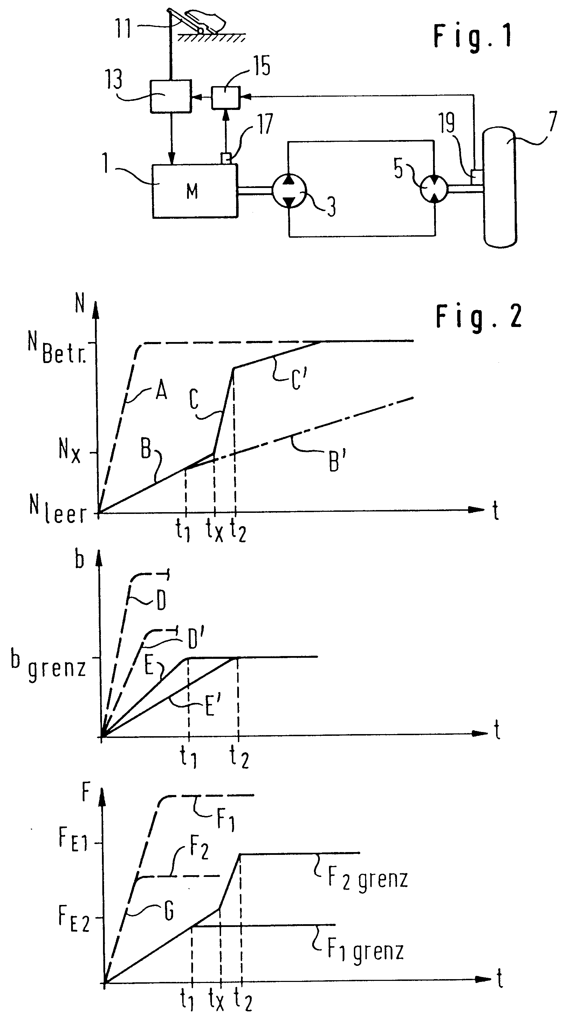

Das in Fig. 1 sehr vereinfacht dargestellte Antriebssystem des Schleppfahrzeuges ist ein hydrostatisches Antriebssystem mit einem Verbrennungsmotor 1, insbesondere einem Dieselmotor, der eine hydraulische Antriebspumpe 3 antreibt, die den nötigen Hydraulikdruck für mindestens einen hydrostatischen Motor 5 erzeugt, der mit einem Rad 7 des Schleppfahrzeuges gekoppelt ist. Vorzugsweise ist jedem Rad des Schleppfahrzeuges ein hydrostatischer Antriebsmotor 5 zugeordnet, und alle Motoren werden parallel zueinander von der Pumpe 3 beaufschlagt. Weitere Einzelheiten des hydrostatischen Antriebssystems, insbesondere Einrichtungen zum Steuern der Pumpleistung der Pumpe 3 bzw. des Durchsatzes der hydrostatischen Motoren 5, Druckregler, Ventile z. B. zur Umkehr der Fahrtrichtung usw. sind dem Fachmann bekannt und in der Zeichnung nicht dargestellt.

Die Leistung des Verbrennungsmotors 1 ist durch ein Gaspedal 11 steuerbar, welches über einen Regler 13 z. B. auf die Einspritzpumpe des Verbrennungsmotors 1 einwirkt, um die dem Motor zugeführte Treibstoffmenge zu steuern. Der Regler empfängt ein oder mehrere Regelsignale von einem Rechner 15, an den ein Sensor 17, der die Drehzahl des Verbrennungsmotors 1 mißt, und ein Sensor 19, der die Drehzahl des Fahrzeugrades 7 mißt, angeschlossen sind. Vorzugsweise sind an den Rechner 15 Drehzahlsensoren an allen Fahrzeugrädern 7 angeschlossen, und der Rechner 15 ist so programmiert, daß er den Mittelwert der gemessenen Raddrehzahlen bildet.

Wenn das Gaspedal 11 durchgetreten wird, dann steigt die dem Motor 1 zugeführte Treibstoffmenge, und damit die Drehzahl des Motors 1, nicht sofort auf den der Stellung des Gaspedals 11 entsprechenden Betriebswert an, sondern der Anstieg der vom Motor 1 entwickelten Antriebsleistung wird durch den Regler 13 begrenzt und gesteuert in Abhängigkeit von den vom Rechner 15 zugeführten Signalen.

Das Kriterium für diese Steuerung des Kraftanstieges ist dabei die Zunahme der Drehzahl des Motors 1, die der Rechner 15 aus dem Signal vom Sensor 17 durch zeitliche Differentiation ermittelt. Hierbei regelt der Regler 15 den Kraftanstieg des Motors 1 derart, daß die Anstiegsgeschwindigkeit der Motordrehzahl einen vorgegebenen Wert nicht übersteigt bzw. einer vorgegebenen Anstiegsrampe folgt.

Diese beschriebene Regelungsmöglichkeit kann für sich allein verwendet werden. Ein zusätzliches Kriterium, nach denen der Regler 13 den Anstieg der Antriebsleistung steuern bzw. begrenzen kann, ist die vom Rechner 15 aus den Drehzahlen der Fahrzeugräder 7 durch zeitliche Differentiation ermittelte Beschleunigung des Fahrzeuges. Der Regler 13 steuert den Kraftanstieg dann so, daß die Beschleunigung des Fahrzeuges einen vorgegebenen Grenzwert nicht übersteigt. Gemäß einer bevorzugten Ausführungsform der Erfindung werden diese beiden Regelungsarten miteinander kombiniert in der Art, daß die Regelung zu Anfang leistungs- bzw. drehzahlabhängig und im späteren Verlauf beschleunigungsabhängig erfolgt. Ein schematisches Beispiel hierfür ist in Fig. 2 veranschaulicht.

Fig. 2 zeigt den beim Betätigen des Gaspedals und Anfahren des Schleppfahrzeuges auftretenden zeitlichen Verlauf der Motordrehzahl N (oberes Diagramm), der Beschleunigung b (mittleres Diagramm) und der auf das Bugfahrwerk wirkenden Zugkraft F (unteres Diagramm), jeweils ohne (gestrichelt) und mit erfindungsgemäßer Regelung.

Ohne die erfindungsgemäße Regelung würde beim Durchtreten des Gaspedals 11 die Drehzahl N schlagartig entsprechend der gestrichelten Kurve A von der Leerlaufdrehzahl Nₗₑₑᵣ auf die Betriebsdrehzahl N_{Betr.} hochspringen. Durch den entsprechenden Anstieg der Motorleistung würde das Schleppfahrzeug mit angekoppeltem Flugzeug entsprechend der Kurve D bei einem leichteren Flugzeug oder gemäß Kurve D' bei einem schwereren Flugzeug beschleunigt werden. Aus dieser Beschleunigung resultiert durch Multiplizieren mit der trägen Masse des geschleppten Flugzeugs ein Anstieg der auf das Bugfahrwerk wirkenden Zugkraft F entsprechend der Kurve G, wobei, wenn die maximale Beschleunigung erreicht ist, eine maximale Zugkraft F1 bei einem leichteren Flugzeug bzw. F2 bei einem schwereren Flugzeug ausgeübt wird. In der Praxis liegen diese Kräfte deutlich über den für leichte bzw. schwerere Flugzeuge typenabhängig vorgeschriebenen Ermüdungs-Grenzbelastungen F_{E1} und F_{E2}.

Der Drehzahl- und damit Leistungsanstieg erfolgt jedoch nicht ungeregelt gemäß der Kurve A, sondern geregelt durch den Regler 13 in Abhängigkeit vom Rechner 15. Gemäß dem vorliegenden Ausführungsbeispiel folgt der geregelte Anstieg der Motordrehzahl N zunächst der Kurve B derart, daß die zeitliche Zunahme der Drehzahl N (d.h. die Steigung der Kurve B) einen Grenzwert nicht übersteigt. Diese Regelung mit konstantem Drehzahlanstieg wird bis zu einer Drehzahl Nₓ durchgeführt, die in geeigneter Weise festgelegt werden kann. Ab Erreichen der Drehzahl Nₓ wird der Anstieg der Drehzahl dann in Abhängigkeit von der gemessenen Beschleunigung des Fahrzeugs geregelt. Gegebenenfalls kann auch bereits unterhalb der Drehzahl Nₓ die Fahrzeugbeschleunigung als zusätzliche Regel- bzw. Begrenzungsgröße herangezogen werden.

Die zusätzliche beschleunigungsabhängige Regelung der Motorleistung erfolgt derart, daß die Beschleunigung des Schleppfahrzeuges mit angekoppeltem Flugzeug einen Grenzwert b_{grenz} nicht überschreiten kann. Der anfängliche Anstieg der Motordrehzahl N gemäß der Kurve B hat einen Anstieg der Beschleunigung des Schleppfahrzeuges zur Folge, der bei einem leichten Flugzeug entsprechend der Kurve E schneller erfolgt als bei einem schweren Flugzeug entsprechend der Kurve E'. Bei einem leichten Flugzeug wird deshalb die Grenzbeschleunigung b_{grenz} relativ früh z.B. zu einem Zeitpunkt t₁ erreicht, der auch schon vor dem Zeitpunkt tₓ liegen kann, an welchem die Motordrehzahl Nₓ erreicht wird. Vom Zeitpunkt t₁ an bleibt die Beschleunigung konstant auf dem Wert b_{grenz} , was einer Zunahme der Motordrehzahl N z.B. entsprechend der Kurve B' entspricht. Nach Erreichen der Grenzbeschleunigung b_{Grenz} bleibt auch die auf das Bugfahrwerk ausgeübte Zugkraft F auf einem konstanten Wert F1_{grenz}, der sich aus b_{grenz} durch Multiplikation mit der Flugzeugmasse ergibt.

Im Falle eines schweren Flugzeuges wird der Anstieg der Beschleunigung entsprechend der Kurve E' erst zu einem späteren Zeitpunkt T2 die Grenzbeschleunigung b_{grenz} erreichen. Da bei der Drehzahl Nₓ die drehzahlabhängige Regelung aufhört, kann zwischen den Zeitpunkten Tₓ und T2 der Drehzahlanstieg entsprechend der Kurve C relativ schnell erfolgen, bis zum Zeitpunkt T2 die Grenzbeschleunigung b_{grenz} erreicht ist und der weitere Drehzahlanstieg dann entsprechend der Kurve C' bei konstanter Fahrzeugbeschleunigung erfolgt, bis die Betriebsdrehzahl N_{Betr.} erreicht ist. Im Falle des schwereren Flugzeuges entspricht die Grenzbeschleunigung b_{grenz} einem größeren Wert F2_{grenz} der maximal auf das Bugfahrwerk ausgeübten Zugkraft.

Man erkennt, daß die Regelung des Anstiegs der Motordrehzahl N im Sinne einer Begrenzung der Fahrzeugbeschleunigung (Kurven B' und C') dafür verantwortlich ist, daß die auf das Bugfahrwerk ausgeübte Zugkraft auf entsprechend der Flugzeugmasse unterschiedliche Werte F1_{grenz} bzw. F2_{grenz} begrenzt werden kann. Die Ermüdungslasten, wie z.B. F_{E1} und F_{E2}, für die die Bugfahrwerke der Flugzeuge herstellerseitig ausgelegt sind, sind natürlich ebenfalls bei schwereren Flugzeugen größer als bei leichteren Flugzeugen. Es ist deshalb möglich, die Grenzbeschleunigung b_{Grenz} auf einen solchen geeigneten Wert festzulegen (in der Praxis beispielsweise 0,3 ms⁻²), daß die sich bei dieser Beschleunigung einstellenden Massenträgheitskräfte des Flugzeugs F1_{grenz} bzw. F2_{grenz} die zugehörigen zulässigen Ermüdungslasten F_{E1} bzw. F_{E2} nicht übersteigen.

Dieses Ziel würde man an sich auch dann erreichen, wenn für die Regelung der Drehzahl N von Anfang an ausschließlich die Beschleunigungsbegrenzung wirksam wäre, d.h. wenn die Beschleunigung entsprechend den Kurven D und D' bis zum Grenzwert b_{grenz} zunehmen würde, so daß die Kurve A zu den entsprechenden Zeitpunkten direkt in die Kurve C' oder B' übergehen würde. Die hätte jedoch den folgenden Nachteil: In Folge der unvermeidlichen Ansprech- und Totzeiten in dem Regelsystem zwischen der Treibstoffzufuhr des Motors 1 und der Drehzahlmessung an den Fahrzeugrädern 7 reagiert das beschleunigungsabhängige Regelsystem relativ träge. Das Erreichen der Grenzbeschleunigung b_{Grenz} wird sich deshalb erst mit einer gewissen Verzögerung am Regler 13 bemerkbar machen, und während dieser Verzögerungszeit kann bereits ein weiterer Anstieg der Motordrehzahl N, und damit der Beschleunigung b und der Zugkraft F eingetreten sein, so daß es zu Kraftspitzen kommen kann, die die jeweiligen Ermüdungslasten F_{E1} bzw. F_{E2} übersteigen. Um dies zu vermeiden, ist die anfängliche drehzahlabhängige Regelung entsprechend der Kurve B vorgesehen, die einen zu schnellen Anstieg der Beschleunigung b auf den Grenzwert b_{grenz} verhindert.

Ein wesentlicher Vorteil der Erfindung besteht darin, daß für die Regelung des Antriebssystems keine Daten über Typ und Beladungszustand des Flugzeuges eingegeben werden müssen und daß auch der Fahrer des Schleppfahrzeuges bei der Betätigung des Gaspedals keine Rücksicht auf Typ und Gewicht des geschleppten Flugzeuges zu nehmen braucht. Er braucht beim Schleppen eines kleineren oder leichteren Flugzeuges das Gaspedal nicht "schonender" zu betätigen, sondern kann genauso kräftig Gas geben, wie beim Schleppen eines großen und voll beladenen Flugzeuges z.B. vom Typ B747. Die vorgesehene drehzahl- und beschleunigungsabhängige Regelung sorgt beim Beschleunigen für die Vermeidung bzw. Reduzierung der in den Bereich der Ermüdungslast fallenden Kraftspitzen. Gleichwohl wird schließlich die volle Betriebsdrehzahl N_{Betr.} und damit die volle Zugkraft des Schleppfahrzeuges erreicht, so daß auch die größten und schwersten Flugzeuge in gewohnter Weise geschleppt werden können.

Die erfindungsgemäße Regelung ermöglicht es somit, die betrieblich jeweils erforderlichen Traktionskräfte bereitzustellen bei gleichzeitiger Begrenzung der jeweiligen Höchstlasten auf die Ermüdungslasten. Der drehzahlgeregelte sanfte Leistungsanstieg gemäß Kurve B von Fig. 2 ermöglicht die Vermeidung von Regelkraftspitzen und damit die Festlegung der Grenzbeschleunigung b_{grenz} auf einen betrieblich vertretbaren Wert.

## Patentansprüche

1. Schleppfahrzeug für Flugzeuge, mit einer Einrichtung zum Ankoppeln oder Aufnehmen des Bugfahrwerkes des Flugzeuges, einem Verbrennungsmotor (1), dessen Leistung mittels eines Stellorgans (11), wie Gashebel od.dgl., steuerbar ist, und einem vom Verbrennungsmotor angetriebenen Antriebssystem (3,5) zum Antreiben der Räder (7) des Schleppfahrzeuges, wobei das Stellorgan (11) den Verbrennungsmotor (1) über einen Regler (13) steuert, dadurch **gekennzeichnet**, daß der Regler (13) bei Betätigung des Stellorgans (11) zum Anfahren des Schleppfahrzeugs die Anstiegsgeschwindigkeit der Drehzahl des Verbrennungsmotors (1) begrenzt.

2. Schleppfahrzeug nach Anspruch 1 , dadurch **gekennzeichnet**, daß der Regler (13) mit einem Rechner (15) verbunden ist, der ein der Drehzahl des Motors (1) proportionales Eingangssignal empfängt und eine vorgegebene konstante Anstiegsgeschwindigkeit der Drehzahl steuert.

3. Schleppfahrzeug nach Anspruch 1 , dadurch **gekennzeichnet**, daß es eine Einrichtung (19, 15) zum Erfassen der Fahrzeugbeschleunigung aufweist, daß ein Rechner (15) zum Vergleichen der gemessenen Beschleunigung mit einem vorgegebenen Grenzwert der Beschleunigung vorgesehen ist, und daß der mit dem Rechner (15) verbundene Regler (13) den Anstieg der Leistung des Motors (1) derart steuert, daß die Fahrzeugbeschleunigung den Grenzwert nicht übersteigt.

4. Schleppfahrzeug nach Anspruch 3 , dadurch **gekennzeichnet**, daß ein Sensor (19) zum Erfassen der Drehzahl eines Rades (7) des Schleppfahrzeuges vorgesehen ist und der Rechner (15) zum Ermitteln der Beschleunigung durch zeitliches Differenzieren der gemessenen Raddrehzahl programmiert ist.

5. Schleppfahrzeug nach Anspruch 4 , dadurch **gekennzeichnet**, daß Drehzahlsensoren (19) an allen Rädern (7) des Schleppfahrzeuges vorgesehen sind und daß der Rechner (15) zum Bilden des Mittelwertes der gemessenen Drehzahlen programmiert ist.

6. Schleppfahrzeug nach einem der Ansprüche 1 bis 5 , dadurch **gekennzeichnet,** daß der Regler (13) mit angeschlossenem Rechner (15) eine solche Regelcharakteristik aufweist, daß er den Anstieg der Motorleistung unterhalb einer vorgegebenen Drehzahl (Nₓ) in Abhängigkeit von der Motordrehzahl entsprechend einer konstanten Anstiegsgeschwindigkeit der Motordrehzahl steuert und oberhalb der vorgegebenen Drehzahl (Nₓ) die Motorleistung in Abhängigkeit von der gemessenen Fahrzeugbeschleunigung im Sinne einer Begrenzung der Fahrzeugbeschleunigung steuert.

## Claims

1. Tractor for towing aeroplanes with a device for coupling with or supporting the nose undercarriage of the aeroplane, an internal combustion engine (1), the output of which can be controlled by a control element (11), such as an accelerator pedal or the like, and a drive system (3, 5) driven by the internal combustion engine for driving the wheels (7) of the towing tractor, in which the control element (11) controls the internal combustion engine (1) via a control unit (13), **characterised** in that the control unit (13) on activating the control element (11) to start the towing tractor limits the increase in speed rpm of the internal combustion engine (1).

2. Towing tractor according to claim 1, **characterised** in that the control unit (13) is connected to a computer (15) which receives an input signal proportional to the speed of the engine (1) and controls a prescribed constant increase in speed of rpm.

3. Towing tractor according to claim 1, **characterised** in that it comprises a device (19, 15) for detecting the acceleration of the tractor, in that a computer (15) is provided for comparing the measured speed with a prescribed speed limit, and in that the control unit (13) connected to the computer (15) controls the increase in the output of the engine (1) so that the acceleration of the tractor does not exceed the prescribed limit.

4. Towing tractor according to claim 3, **characterised** in that a sensor (19) is provided for detecting the speed of a wheel (7) of the towing tractor and the computer (15) is programmed to determine the acceleration by the time differential of the measured wheel rpm

5. Towing tractor according to claim 4, **characterised** in that the speed sensors (19) are provided on all wheels (7) of the towing tractors, and in that the computer (15) is programmed to form the average of the measured number of rpm.

6. Towing tractor according to one of claims 1 to 5, **characterised** in that the control unit (13) with connected computer (15) has such a control characteristic that it controls the increase of engine output below a predetermined number of revolutions (Nₓ) depending on the engine speed according to a constant rise in speed of the engine and above the prescribed number of revolutions (Nₓ) controls the engine output depending on the measured acceleration of the tractor in order to restrict the acceleration of the tractor.

## Revendications

1. Tracteur pour remorquer des avions, comportant un dispositif pour se coupler au, ou recevoir le, train avant de l'avion, un moteur à combustion interne (1) dont on peut commander la puissance au moyen d'un organe réglant (11) comme une pédale d'accélérateur ou analogue, et un système d'entraînement (3, 5), entraîné par le moteur à combustion interne, pour entraîner les roues (7) du tracteur, l'organe réglant (11) commandant le moteur à combustion interne (1) par l'intermédiaire d'un régulateur (13), caractérisé par le fait que, lors de la manoeuvre de l'organe réglant (11) au démarrage du tracteur, le régulateur (13) limite la vitesse de croissance de la vitesse de rotation du moteur à combustion interne (1).

2. Tracteur selon la revendication 1, caractérisé par le fait que le régulateur (13) est relié à un calculateur (15) qui reçoit un signal d'entrée proportionnel à la vitesse de rotation du moteur (1) et commande une vitesse de croissance constante, prescrite de la vitesse de rotation.

3. Tracteur selon la revendication 1, caractérisé par le fait qu'il présente un dispositif (19, 15) pour saisir l'accélération du tracteur, qu'un calculateur (15) est prévu pour comparer l'accélération mesurée avec une valeur limite prescrite, de l'accélération, et que le régulateur (13) lié au calculateur (15) commande la croissance de la puissance du moteur (1) de façon que l'accélération du tracteur ne dépasse pas la valeur limite.

4. Tracteur selon la revendication 3, caractérisé par le fait qu'un capteur (19) est prévu pour saisir la vitesse de rotation d'une roue (7) du tracteur et que le calculateur (15) est programmé pour établir l'accélération par différentiation, dans le temps, de la vitesse de rotation de la roue, mesurée.

5. Tracteur selon la revendication 4, caractérisé par le fait que des capteurs de vitesse de rotation (19) sont prévus sur toutes les roues (7) du tracteur et que le calculateur (15) est programmé pour former la valeur moyenne des vitesses de rotation mesurées.

6. Tracteur selon l'une des revendications 1 à 5, caractérisé par le fait que le régulateur (13) présente, avec le calculateur (15) qui lui est relié, une caractéristique de régulation telle qu'endessous d'une vitesse de rotation prescrite (Nₓ) il commande la croissance de la puissance du moteur en fonction de la vitesse de rotation du moteur, selon une vitesse de croissance constante de la vitesse de rotation du moteur, et qu'au-dessus de la vitesse de rotation prescrite (Nₓ), il commande la puissance du moteur en fonction de l'accélération, mesurée, du tracteur, au sens d'une limitation de l' accélération du tracteur.
